(19) Europäisches Patentamt
European Patent Office
Office européen des brevets

(11) **EP 4 382 344 A1**

(12) **EUROPEAN PATENT APPLICATION**

(43) Date of publication:
**12.06.2024 Bulletin 2024/24**

(21) Application number: **22211692.3**

(22) Date of filing: **06.12.2022**

(51) International Patent Classification (IPC):
**B60L 15/20** (2006.01)    **B60L 53/60** (2019.01)

(52) Cooperative Patent Classification (CPC):
**B60L 15/20; B60L 53/60;** B60L 58/12;
B60L 2240/72

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **VOLVO TRUCK CORPORATION**
**405 08 Göteborg (SE)**

(72) Inventors:
• HALLBERG, Linus
  **423 73 SÄVE (SE)**
• SINGH, Gurpreet
  **421 39 VÄSTRA FRÖLUNDA (SE)**

(74) Representative: **Kransell & Wennborg KB**
**P.O. Box 2096**
**403 12 Göteborg (SE)**

(54) **A METHOD FOR CHARGING A BATTERY OF AN ELECTRIC VEHICLE AT A CHARGING STATION**

(57)    A method for charging a battery (3) of an electric vehicle (1) at a charging station (201). The method comprises: providing (S10) altitude data of at least one of the charging station (201) and the electric vehicle (1). In response to the provided altitude being below a predetermined altitude threshold, performing (S20) a first type charging event of the battery (3) of the electric vehicle (1) and stopping the first type charging event at a first predetermined charging level (1000). In response to the received provided altitude being above the predetermined altitude threshold, evaluating (S30) the topography in a predetermined area (300) around the charging station (201). In response to the topography in the predetermined area (300) being identified as belonging to a predefined group of flat surroundings, performing (S40) a second type charging event of the battery (3) of the electric vehicle (1) and stopping the second type charging event at a second predetermined charging level (1001). In response to the topography in the predetermined area (300) being identified as belonging to a predefined group of hilly surroundings, performing (S50) a third type charging event of the battery (3) of the electric vehicle (1) and stopping the third type charging event at a third predetermined charging level (1002).

Fig. 1

EP 4 382 344 A1

**Description**

TECHNICAL FIELD

The present invention relates to a method for charging a battery of an electric vehicle at a charging station. The invention further relates to a charging system comprising at least one charging station and an electric vehicle, a computer program and a computer readable medium carrying a computer program.

The invention may be applied to any electrically operated heavy-duty vehicles, such as trucks, buses and construction equipment, passenger cars, etc. It is applicable for fully electrically operated vehicles as well as for hybrid vehicles, comprising also a combustion engine.

BACKGROUND

A vehicle typically comprises an engine for propelling the vehicle. The engine may be powered by various means, such as e.g. by liquid or gaseous fuel in an internal combustion engine, or by electric power in an electric machine. Moreover, hybrid solutions exist in which the vehicle is propelled both by an internal combustion engine and an electric machine. In either way, energy storage devices are used to store the energy needed in order to operate the engine for propelling the vehicle. For electrical vehicles, a battery, e.g. comprised in a battery system, may be used to power the electric machine, which battery periodically needs to be charged.

One common solution to charge the battery of the electric vehicle is at a charging station by using a power transmitter connected to an external power source, such as e.g. a power grid, by an electrical wire. Typically, the electric vehicle is parked at the charging station, e.g. in a parking/charging spot providing such charging capabilities, and the driver or other personnel manually plug the power transmitter, e.g. a plug, into a power receiver, e.g. a socket of the vehicle. The socket is in electrical communication with the battery for enabling charging of the same. Another solution to charge the battery of the electric vehicle is by a wireless charging system. The wireless charging system typically includes a charging station having a power emitting coil, or transmission coil, configured to emit electromagnetic radiation. The wireless charging system typically further comprises a power receiving coil, preferably arranged on the electrical vehicle and in electrical communication with the battery, and being configured to receive the emitted electromagnetic radiation for charging the battery.

After the battery of the electric vehicle has been charged, the electric vehicle typically drives away from the charging station eventually resulting in a renewed need for charging. The electric vehicle may comprise a regenerative braking system configured to transfer the kinetic energy of the vehicle into stored energy by charging of the battery as the electric vehicle brakes or slows down. Hereby, the range of the electric vehicle may be extended, and the need for charging at a charging station postponed. However, in case the battery regeneration, i.e. the charging of the battery by the regenerative braking system, results in a nominally fully charged battery, further charging may damage the battery. In such cases, the kinetic energy of the vehicle, as the vehicle brakes or slows down, must be discarded by other means than the battery regeneration. For example, a resistor can be used to consume the produced electricity from the regenerative braking system. However, such resistor is heated and must typically be cooled. Both the resistor and the means needed for cooling the resistor adds costs and/or results in wasting of energy.

SUMMARY

It is an object of the present disclosure to at least to some extent alleviate the shortcomings discussed above in relation to known charging of electric vehicles, and to improve a method for charging an electric vehicle at a charging station.

According to at least a first aspect of the present invention, a method for charging a battery of an electric vehicle at a charging station is provided. The method comprises:

- providing altitude data of at least one of the charging station and the electric vehicle located at the charging station,
- in response to the provided altitude being below a predetermined altitude threshold, performing a first type charging event of the battery of the electric vehicle using an external power source of the charging station and stopping the first type charging event at a first predetermined charging level below the nominally fully charged level of the battery,
- in response to the provided altitude being above the predetermined altitude threshold, evaluating the topography in a predetermined area around the charging station, and

    - in response to the topography in the predetermined area being identified as belonging to a predefined group of flat surroundings, performing a second type charging event of the battery of the electric vehicle using the external power source of the charging station and stopping the second type charging event at a second predetermined charging level below the nominally fully charged level, and

- in response to the topography in the predetermined area being identified as belonging to a predefined group of hilly surroundings, performing a third type charging event of the battery of the electric vehicle using the external power source of the charging station and stopping the third type charging event at a third predetermined charging level below the nominally fully charged level,

wherein the first predetermined charging level is higher than the second predetermined charging level and wherein the second predetermined charging level is higher than the third predetermined charging level.

Hereby, a simply yet effective method for charging a battery of an electric vehicle is provided. By stopping the first, second and third type charging events at a corresponding first, second and third predetermined charging level below the nominally fully charged level, the battery of the electric vehicle can be charged by regeneration upon driving away from the charging station, wherein the regeneration capacity is adapted based on the altitude at which the charging of the battery occurs, and on the topography in the predetermined area around the charging station. That is, by providing different charging options of the battery of the electric vehicle as the at least three different type of charging events, wherein both the altitude at which the charging of the battery occurs (i.e. altitude of the charging station and/or the electric vehicle located at the charging station) and the topography in the predetermined area around the charging station are included in the method deciding which of the charging event types that is to be chosen, charging of the battery of the electric vehicle with a simple yet effective means to adapt the regeneration capacity is provided. The regeneration capacity is typically directly correlated to the charging level below the nominally fully charged level of the battery.

In other words, the charging of the battery of the electrical vehicle may be improved or optimized with regards to expected regeneration of the vehicle. In particular, by stopping the first, second and third type charging events at the corresponding first, second and third predetermined charging level below the nominally fully charged level of the battery, and wherein the first predetermined charging level is higher than the second predetermined charging level and wherein the second predetermined charging level is higher than the third predetermined charging level, an improved utilization of the battery while minimizing (or avoiding) the need to dispose the regenerative energy by other means than charging the battery is provided.

The altitude is typically referring to the altitude above sea level. Thus, the altitude data of at least one of the charging station and the electric vehicle located at the charging station, comprises the altitude above sea level for the charging station and/or the electric vehicle located at the charging station. The predetermined altitude threshold is e.g. 200 m above sea level. Typically, the method comprises comparing the provided altitude data with the predetermined altitude threshold.

According to at least one example embodiment, a charging event is referring to a time-event, or occurrence in time, at which charging of the battery occurs, i.e. charging of the battery in a time-window, or an elapsed time at which charging of the battery occurs. Thus, a charging event is typically started at a first point in time, i.e. when electricity from the external power source of the charging station begins to charge the battery, and stopped at a second point in time, i.e. when electricity from the external power source of the charging station ceases to charge the battery, wherein the second point in time occurs after the first point in time. The time-window, or elapsed time at which charging of the battery occurs, extends from the first point in time to the second point in time. Different ways to perform a charging event may be referred to as different types of charging events. Thus, the charging of the battery by the first, second and third type charging events may in principle be performed in the same, or corresponding, manner, with the only difference that the corresponding predetermined charging level at which the charging event is stopped differ between the charging event types. That is, the different types of the charging events may be defined by the predetermined charging level at which the associated charging event is to be stopped.

According to at least one example embodiment, the predetermined area around the charging station is an area with a known, and predetermined, radius (or other equivalent radius) around the charging station. For example, the radius, or equivalent radius, of such predetermined area may be defined as the distance to a secondary charging station, the secondary charging station being e.g. the nearest charging station (based on travelled distance along the road separating the charging stations, or based on as the crow flies). As an alternative, the radius, or equivalent radius, of the predetermined area is based a predetermined destination of the electric vehicle.

According to at least one example embodiment, the predetermined area around the charging station is an area, such as a circular area, within a radii of 10-30 km of the charging station. The topography in the predetermined area may e.g. be evaluated for any possible route which the electric vehicle may travel when leaving the charging station.

According to at least one example embodiment, the evaluated topography in the predetermined area is the topography of the roads in the predetermined area.

Hereby, the roads which the electric vehicle may travel when leaving the charging station, subsequently to charging the battery according to the described method, may be evaluated with regards to its topography. Any road which the electric vehicle may travel when leaving the charging station may be referred to as a pre-known road, i.e. that at least the topography of the road is known (or predefined). Thus, the electric vehicle may travel along at least one pre-known road, e.g. being a pre-known road included in a predetermined route of the electric vehicle, in the predetermined area when leaving the charging station subsequently to charging the battery according to the described method. Any pre-known road is thus pre-known at least with regards to its topography. The step of evaluating the topography in the predetermined area around the charging station may thus be performed by evaluating the topography of the roads in the predetermined area, the roads being possible roads to travel for the electric vehicle as it leaves the charging station subsequently to charging the battery according to the previously described method. The topography may thus be referred to as road topography, and the corresponding step comprising evaluation the road topography in the predetermined area around the charging station.

According to at least one example embodiment, the topography is defined at least by the contour lines in the predetermined area. The topography of the predetermined area may be acquired from map data. The topography may according to at least one example embodiment comprise at least slope data (i.e. road inclination data) of the road in the predetermined area.

The predefined group of flat surroundings is defined by the topography of the predetermined area. For example, the predefined group of flat surroundings may be defined by the contour lines in the predetermined area, such as e.g. the closeness, or density, of the contour lines. Thus, with reference to the embodiment in which the evaluated topography in the predetermined area is the topography of the roads in the predetermined area, the predefined group of flat surroundings may be a predefined group of flat roads, defined by the topography of the roads, e.g. by the contour lines along the roads. As a further example, the predefined group of flat surroundings may be defined by the slope in the predetermined area, or correspondingly, the predefined group of flat roads may be defined by the slope of the roads, i. e. the road inclination. For example, any road having a maximum slope of below 3 % may be defined as belonging to the predefined group of flat roads, wherein the slope is determined as the mean slope at least along a 50 m road section. For example, the topography in the predetermined area is identified as belonging to the predefined group of flat surroundings, or predefined group of flat roads, if all of the roads in the predetermined area has a maximum slope of below 3 %.

The predefined group of hilly surroundings is defined by the topography of the predetermined area. For example, the predefined group of hilly surroundings may be defined by the contour lines in the predetermined area, such as e.g. the closeness, or density, of the contour lines. Thus, with reference to the embodiment in which the evaluated topography in the predetermined area is the topography of the roads in the predetermined area, the predefined group of hilly surroundings may be a predefined group of hilly roads, defined by the topography of the roads, e.g. by the contour lines along the roads. As a further example, the predefined group of hilly surroundings may be defined by the slope in the predetermined area, or correspondingly, the predefined group of hilly roads may be defined by the slope of the roads, i.e. the road inclination. For example, any road having a maximum slope of above 3 % may be defined as belonging to the predefined group of hilly roads, wherein the slope is determined as the mean slope at least along a 50 m road section. For example, the topography in the predetermined area is identified as belonging to the predefined group of hilly surroundings, or predefined group of hilly roads, if at least one of the roads in the predetermined area has a maximum slope of above 3 %.

According to at least one example embodiment, the topography in the predetermined area is identified as belonging to the predefined group of hilly surroundings, or predefined group of hilly roads, if at least one of the roads in the predetermined area has a maximum slope of above 3 % along at least a predefined distance, e.g. at least 3 % of the road distance, and if not, is identified as belonging to the predefined group of flat surroundings, or predefined group of flat roads.

As a further example, the predefined group of flat and hilly surroundings may be defined by the altitude drop in the predetermined area, or correspondingly, the predefined group of flat and hilly roads may be defined by the altitude drop of the roads. According to at least one example embodiment, the topography in the predetermined area is identified as belonging to the predefined group of hilly surroundings, or predefined group of hilly roads, if at least one of the roads in the predetermined area has an altitude drop of at least 50 m - 200 m, such as e.g. 150 m, and if not, is identified as belonging to the predefined group of flat surroundings, or predefined group of flat roads.

According to at least one example embodiment, the step of evaluating the topography in a predetermined area around the charging station comprises the step of providing, or receiving, topography data of said predetermined area (e.g. in the form of road topography data). This may e.g. be achieved by providing, or receiving, map data of said predetermined area. Moreover, the step of evaluating the topography in a predetermined area around the charging station may comprise the step of comparing the provided, or received, topography data, with a predetermined criterium to identify the topography in the predetermined area. The step of identifying the topography in the predetermined area may comprise the step of classifying, or categorizing, the evaluated topography into predefined groups as previously mentioned, i.e. to identify the topography in the predetermined area as belonging to the predefined group of flat surroundings, or belonging to the predefined group of hilly surroundings. That is, the predetermined criterium may be any one of those previously mentioned, e.g. based on a maximum slope of above (or below) 3 % or an altitude drop of at least 150 m.

According to at least one example embodiment, the method further comprises:

- providing a predetermined destination of the electric vehicle, the predetermined destination being separated from the charging station by a predetermined route with known topography.

Hereby, and according to at least one example embodiment, the evaluated topography in the predetermined area is the topography of the predetermined route, e.g. the pre-known road(s) included in such predetermined route, in the predetermined area. Thus, and according to at least one example embodiment, the predetermined route may comprise one or more of the pre-known roads. The predetermined destination may e.g. be a secondary charging station. The second charging station may e.g. be the charging station among a plurality of charging stations being located closest to the charging station at which the vehicle is located. The predetermined route between the charging station and the predetermined destination may thus be the route among a plurality of possible routes between the charging station and the secondary charging station with the shortest distance.
The decision of whether the second or third type charging event is to be used may be based on the evaluation of the topography of the predetermined route, or pre-known road(s) included in such predetermined route. In other words, the method may be defined as in the following:

- in response to the provided altitude being above the predetermined altitude threshold, evaluating the topography of the predetermined route in the predetermined area around the charging station, and

    - in response to the topography of the predetermined route being identified as belonging to the predefined group of flat surroundings (or flat roads), performing the second type charging event of the battery of the electric vehicle using the external power source of the charging station and stopping the second type charging event at a second predetermined charging level below the nominally fully charged level, and
    - in response to the topography of the predetermined route being identified as belonging to the predefined group of hilly surroundings (or hilly roads), performing the third type charging event of the battery of the electric vehicle using the external power source of the charging station and stopping the third type charging event at a third predetermined charging level below the nominally fully charged level,

wherein the first predetermined charging level is higher than the second predetermined charging level and wherein the second predetermined charging level is higher than the third predetermined charging level.
According to at least one example embodiment, the third predetermined charging level is set to correspond to the predicted battery regeneration when driving the electric vehicle along the predetermined route to the predetermined destination.
Hereby, the setting of the third predetermined charging level can be improved. Thus, charging of the battery with regards to regeneration capacity may be improved. Moreover, by determining the predicted battery regeneration only for the third predetermined charging level (and thus the third type charging event), there is a reduced need, or in some cases no need, to acquire sensitive data from the electric vehicle, such as route planning or scheduled destinations (e.g. when the first and/or second type charging events are chosen instead of the third type charging event). The predetermined destination may be located within the predetermined area around the charging station.
According to at least one example embodiment, the first, second and third predetermined charging level is set to correspond to an estimated battery regeneration when driving the electric vehicle in the predetermined area, e.g. from the charging station to the predetermined destination, wherein the estimated battery regeneration with regards to the first and second predetermined charging level is set to a fixed value, and wherein the estimated battery regeneration with regards to the third predetermined charging level is the previously described predicted battery regeneration (i.e. depending on the predicted battery regeneration when driving the electric vehicle along the predetermined route to the predetermined destination). Hereby, an improved utilization of the battery while minimizing (or avoiding) the need to dispose the regenerative energy by other means than charging the battery is provided.
According to at least one example embodiment, the predicted battery regeneration is determined by at least known altitude of the charging station, the known topography of the predetermined route between the charging station and the predetermined destination, the weight of the electric vehicle and a pre-determined regeneration efficiency of the electric vehicle.
Hereby, the setting of the third predetermined charging level can be further improved. Thus, charging of the battery with regards to regeneration capacity may be further improved. The step of stopping the third type charging event at the third predetermined charging level may be determined by means of a charging function. The charging function is an algorithm determining the third predetermined charging level using input data corresponding to the predicted battery regeneration when driving the electric vehicle along the predetermined route from the charging station to the predetermined destination, wherein the input data comprises at least the known altitude of the charging station and/or the electric vehicle located at the charging station, the known topography in the predetermined area (e.g. known topography of the predetermined route), the weight of the electric vehicle and the pre-determined regeneration efficiency of the electric vehicle. The battery regeneration (as work in units Joule) may e.g. be calculated using equation 1:

$$\text{Altitude change (m)} * \text{vehicle weight (kg)} * 9.81 \text{ (m/s2)} * \text{regeneration efficiency (1)}$$

The altitude change may be determined by the known altitude of the charging station and/or the electric vehicle located at the charging station and the known topography in the predetermined area (e.g. known topography of the predetermined route). The vehicle weight may be referred to as the mass of the vehicle. Equation 1 can easily be transformed into the unit power (J/s) by applying it over a time interval.

According to at least one example embodiment, the predicted battery regeneration is determined as the most limiting battery regeneration of the battery of the electric vehicle occurring somewhere along the predetermined route between the charging station and the predetermined destination.

Hereby, the setting of the third predetermined charging level can be further improved. Thus, charging of the battery with regards to regeneration capacity may be further improved.

According to at least one example embodiment, the most limiting battery regeneration of the battery of the electric vehicle along the predetermined route between the charging station and the predetermined destination is determined to a point along the predetermined route at which the battery of the electric vehicle is predicted to be nominally fully charged.

That is, by utilizing the most limiting battery regeneration of the battery of the electric vehicle occurring somewhere along the predetermined route between the charging station and the predetermined destination, the battery may reach its nominally fully charged level while travelling along the predetermined route, while avoiding (or at least greatly reduce) the need to dispose the regenerative energy by other means than charging the battery. In other word, the step of stopping the third type charging event at the third predetermined charging level is performed such that the battery is charged to a level in which the available charge storage corresponds to a predicted amount of charge generated by battery regeneration when driving the electric vehicle along the predetermined route between the charging station and the predetermined destination.

Typically, the charging station is located at a higher altitude (i.e. at a higher elevation compared to sea level) than said point along the predetermined route at which the battery of the electric vehicle is predicted to be nominally fully charged. Thus, when driving the electric vehicle along the predetermined route from the charging station to the predetermined destination, the battery of the electric vehicle will be charged by regeneration at least prior to reaching said point along the predetermined route. As an alternative, the most limiting battery regeneration is the battery regeneration predicted to result in the highest charge of the battery occurring somewhere along the predetermined route between the charging station and the predetermined destination. Typically, such limiting battery regeneration is occurring relatively close to the charging station, and/or at the first downhill (or first larger downhill), as the battery here is more likely to be at a high charge.

For example, when determining the most limiting battery regeneration, a cumulative power regeneration along the predetermined route between the charging stations and the predetermined destination may be used. Thus, the cumulative regeneration along the predetermined route up to the point along the route at which the battery of the electric vehicle is predicted to be nominally fully charged may be included in the determination of the most limiting battery regeneration. The cumulative regeneration may preferably include prediction of the power that will be consumed by the electric vehicle when driving along the predetermined route. The predicted power consumption may depend on weather, traffic conditions, etcetera, well known to a person skilled in the art. A predictive power algorithm may be utilized to predict the power consumption the cumulative regeneration. The cumulative regeneration may thus be based on the predicted power or energy consumed by the electric vehicle when driving along the predetermined route, as well as the predicted power or energy generated by the battery regeneration and charged to the battery. In other words, the electric vehicle will store (by charging) electricity and utilize electricity when driving along the predetermined route from charging station to the predetermined destination.

According to at least one example embodiment, at least one of the first, second and third predetermined charging levels is determined on-board the electric vehicle.

Thus, the use of data, or information, externally of the electric vehicle may be reduced or even omitted. For example, the method for charging the battery of the electric vehicle at the charging station, at least the decision of whether charging by means of the first, second or third type charging event, is determined on-board the electric vehicle. For example, the method may be carried out solely by using data available on-board the electric vehicle.

According to at least one example embodiment, the electric vehicle comprises a control unit configured to perform at least some of the steps of the method for charging the battery of the electric vehicle at the charging station. For example, the control unit may receive the altitude data of the charging station and/or of the electric vehicle located at the charging station. Thus, the provided altitude data may be referred to as received altitude data. According to at least one example embodiment, the control unit comprises data of the predetermined route and the known topography of the predetermined area. According to at least one example embodiment, the first, second and/or third predetermined charging level is determined by the control unit. According to at least one example embodiment, the control unit performs any comparison between the altitude data and the predetermined altitude threshold, and/or performs the step of evaluating the topography in the predetermined area around the charging station.

According to at least one example embodiment, the method may comprise the step of retrieving the weight and the pre-determined regeneration efficiency of the electric vehicle by the control unit.

According to at least one example embodiment, the external power source of the charging station is configured to supply electricity from the grid, e.g. the main electrical grid.

According to a second aspect of the present invention, a charging system comprising at least one charging station and an electric vehicle having a battery configured to be charged at the charging station is provided. The charging system comprising a control unit configured to:

receive altitude data of at least one of the charging station and the electric vehicle located at the charging station,

- in response to the received altitude being below a predetermined altitude threshold, perform a first type charging event of the battery of the electric vehicle using an external power source of the charging station and stopping the first type charging event at a first predetermined charging level below the nominally fully charged level of the battery,
- in response to the received altitude being above the predetermined altitude threshold, evaluate the topography in a predetermined area around the charging station, and

  - in response to the topography in the predetermined area being identified as belonging to a predefined group of flat surroundings, perform a second type charging event of the battery of the electric vehicle using the external power source of the charging station and stopping the second type charging event at a second predetermined charging level below the nominally fully charged level, and
  - in response to the topography in the predetermined area being identified as belonging to a predefined group of hilly surroundings, perform a third type charging event of the battery of the electric vehicle using the external power source of the charging station and stopping the third type charging event at a third predetermined charging level below the nominally fully charged level,

wherein the first predetermined charging level is higher than the second predetermined charging level and wherein the second predetermined charging level is higher than the third predetermined charging level.

Effects and features of the second aspect of the invention are largely analogous to those described above in connection with the first aspect of the invention. Embodiments mentioned in relation to the first aspect of the invention are largely compatible with the second aspect of the invention, of which some are exemplified below.

According to at least one example embodiment, the charging station is a first charging station, and the charging system comprises at least a second charging station. The second charging station may be configured in a corresponding manner as the first charging station. For example, the second charging station may comprise a corresponding external power source.

According to at least one example embodiment, the control unit is an electrical control unit, ECU, comprised in the vehicle.

According to a third aspect of the invention, a computer implemented method for charging a battery of an electric vehicle at a charging station is provided. The method comprising:

- providing, by a processor device, altitude data of at least one of the charging station and the electric vehicle located at the charging station,
- in response to the provided altitude being below a predetermined altitude threshold, performing, by the processor device, a first type charging event of the battery of the electric vehicle using an external power source of the charging station and stopping the first type charging event at a first predetermined charging level below the nominally fully charged level of the battery,
- in response to the provided altitude being above the predetermined altitude threshold, evaluating, by the processor device, the topography in a predetermined area around the charging station, and

  - in response to the topography in the predetermined area being identified as belonging to a predefined group of flat surroundings, performing, by the processor device, a second type charging event of the battery of the electric vehicle using the external power source of the charging station and stopping the second type charging event at a second predetermined charging level below the nominally fully charged level, and

- in response to the topography in the predetermined area being identified as belonging to a predefined group of hilly surroundings, performing, by the processor device, a third type charging event of the battery of the electric vehicle using the external power source of the charging station and stopping the third type charging event at a third predetermined charging level below the nominally fully charged level,

wherein the first predetermined charging level is higher than the second predetermined charging level and wherein the second predetermined charging level is higher than the third predetermined charging level.

Thus, the example of the first aspect of the invention may be implemented as a computer implemented method.

According to a fourth aspect of the invention, a control system comprising one or more control units configured to perform the method of the first aspect of the invention, or the computer implemented method of the third aspect of the invention, is provided.

The control unit may be comprised in the electric vehicle, or in the charging station of the charging station system of the second aspect of the invention.

According to a fifth aspect of the invention, a vehicle comprising the control system of the fourth aspect of the invention, to perform the method of the first aspect of the invention, or the computer implemented method of the third aspect of the invention.

The vehicle is typically an electric vehicle as previously described.

According to a sixth aspect of the invention, a computer program comprising instructions to cause the charging system of the second aspect of the invention to execute the steps of the method of the first aspect of the invention, when the program is run on a computer, is provided.

According to a seventh aspect of the invention, a computer readable medium carrying a computer program comprising instructions to cause the charging system of the second aspect of the invention to execute the steps of the method of the first aspect of the invention, when the program is run on a computer, is provided.

Effects and features of the third to seventh aspects of the invention are largely analogous to those described above in connection with the first aspect of the invention. Embodiments mentioned in relation to the first and second aspects of the invention are largely compatible with the third to seventh aspects of the invention, of which some are exemplified below.

According to at least one example embodiment, applicable to any one of the first to seventh aspects of the invention, the electric vehicle comprises an electric machine wherein the battery is configured to power the electric machine. The battery is preferably a high voltage battery, e.g. having an operating voltage higher than 48 V. The electric vehicle may be a full electric vehicle or a hybrid. Thus, the electric machine is preferably a traction electric machine configured to at least partly contributing to propelling the vehicle. In other words, the electric machine is preferably coupled to a drive shaft, e.g. via a gear box, the drive shaft being configured to transfer motion to propelling means of the vehicle, such as the wheels. The electric vehicle is configured to be charged by the external power source at the charging station. The charging station may be connected to the grid, and the external power source may e.g. be a power cable, a power conducting means including a power transmitter configured to conductively transfer power to a power receiver on the electric vehicle, or a wireless charging arrangement such as e.g. an inductive charging means. For example, and according to at least one example embodiment, the charging station comprises a movable arm comprising the external power source and being configured to move in order to contact a part of the electric vehicle such as e.g. the roof of the vehicle. Correspondingly, the electric vehicle may comprise a power receiver arranged on the roof of the electric vehicle and be arranged as e.g. a contact rail. Such charging configuration with a movable arm and roof-mounted contact rails may referred to as conductive static charging via a pantograph. By the charging, the battery configured to power the electric machine may be charged, e.g. using direct current.

According to at least one example embodiment, applicable to any one of the first to seventh aspects of the invention, the charging of the battery may be determined by the State-of-Charge, SoC, of the battery. SoC refers to the level of charge of the battery relative to its capacity. The units of SoC are typically in percentage points (0 % = empty; 100 % = full) Thus, the nominally fully charged level refers to a SoC of 100 % (or being rated to 100 %). The battery regeneration may be referred to as battery power regeneration.

Further advantages and features of the present disclosure are disclosed and discussed in the following description and the accompanying drawings.

BRIEF DESCRIPTION OF THE DRAWINGS

With reference to the appended drawings, below follows a more detailed description of embodiments of the invention cited as examples. In the drawings:

Fig. 1 is a schematic view of a charging system comprising at least a first charging station and an electric vehicle charging at the first charging station, in accordance with an example embodiment of the invention;

Fig. 2 is a schematic side view of at least a part of the charging system of Fig. 1;

Fig. 3 is a graph representing the level of charge of the battery of the electric vehicle; and

Fig. 4 is a flowchart illustrating the steps of a method in accordance with example embodiments of the invention.

DETAILED DESCRIPTION OF EXAMPLE EMBODIMENTS OF THE INVENTION

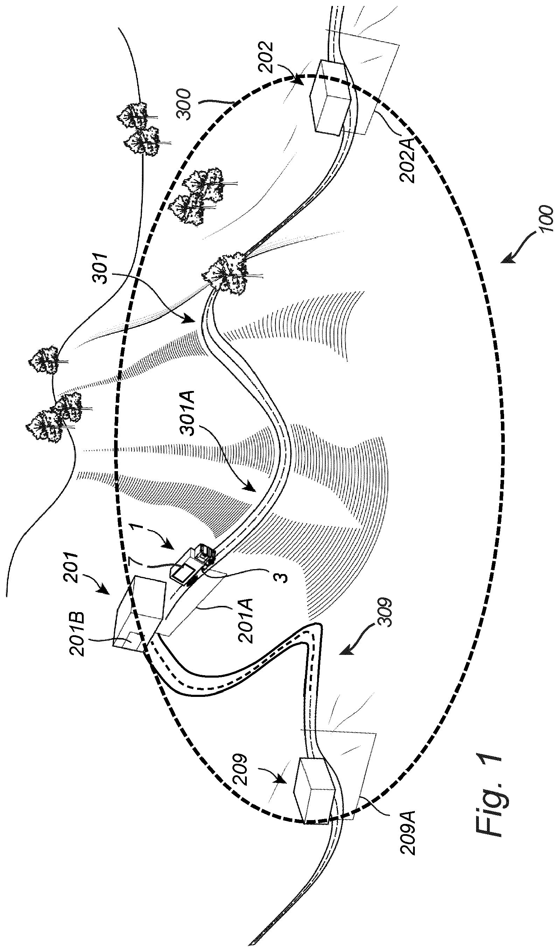

With reference to Fig. 1, a charging system 100 comprising at least a first charging station 201 and an electric vehicle 1 having a battery 3 configured to be charged at the first charging station 201 is disclosed. The charging system 100 may furthermore comprise a second charging station 202, and/or a third charging station 209, separated from the first charging station 201 by a first route 301 and a second route 309, respectively. In the example embodiment of Fig. 1, the first route 301 corresponds to a first road and the second route 309 corresponds to a second road, but any of the first and second routes 301, 309 may be comprised of one or several roads.

The electric vehicle 1 is in Fig. 1 embodied as a heavy duty truck 1, however, it should be mentioned that other vehicles may be comprised in the charging system 100, such as busses, light-weight trucks, passenger cars, etcetera, which vehicles are in need of charging. The vehicle 1 is an electric vehicle, such as a full electric vehicle or a hybrid, comprising a battery 3 and a motor or engine (not shown), here referred to as an electric machine powered by the battery. The electric vehicle 1 is configured to be charged by the first charging station 201, and typically the second and third charging stations 203, 209. In Fig. 1, the charging is achieved by means of corresponding external power sources 201A, 202A, 209A arranged on the charging stations 201, 202, 209 and being configured to transfer power from the grid to a power receiver of the electric vehicle 1. The charging may as well be achieved by a wireless charging system (not shown), such as an inductive charging system comprising a transmitting coil and a receiving coil of which one is arranged on the electric vehicle 1.

The first and second routes 301, 309 have known topography, e.g. as indicated for the first route 301 including a downhill portion 301A. Moreover, each one of the first, second and third charging stations 201, 202, 209 is located at a known altitude above sea level and is configured to charge the electric vehicle 1 as previously described. The electric vehicle 1 has a known weight and a pre-determined regeneration efficiency.

The electric vehicle 1 typically comprises a regenerative braking system of a known type. The regenerative braking system generally comprises a kinetic energy recovery system configured to transfer kinetic energy of an object in motion, i.e. the vehicle, into stored energy, i.e. charging of the battery, to slow the vehicle down. For example, the regenerative braking system comprises an electric generator, which preferably is the same component as the previously mentioned electric machine. Thus, the energy produced when slowing the vehicle down, typically by braking, is stored chemically in the battery (i.e. regenerative charging of the battery 3, or simply battery regeneration). The battery regeneration of the regenerative braking system is associated with a regeneration efficiency, i.e. how efficient the energy produced when slowing the vehicle down is stored in the battery 3, as previously described with reference to equation 1.

The first charging station 201 comprises an external power source 201A (or a first charging station external power source 201A) configured to charge the electric vehicle 1 by performing a first, second and/or third type charging event of the battery 3, which is described later in the text. As shown in Fig. 1, the electric vehicle 1 is being charged by the external power source 201A of the first charging station 201 (e.g. by supplying power from the grid). Moreover, the second charging station 202 comprises an external power source 202A (or a second charging station external power source 202A) and the third charging station 209 comprises an external power source 209A (or a third charging station external power source 209A) configured to charge the battery 3 in a corresponding manner as the external power source 201A of the first charging station 201. The external power sources 201A, 202A, 209A are schematically shown in Fig. 1. As shown in Fig. 1, the electric vehicle 1 has not yet reached the second charging station 202, and is thus not (yet) being charged by the external power source 202A of the second charging station 202.

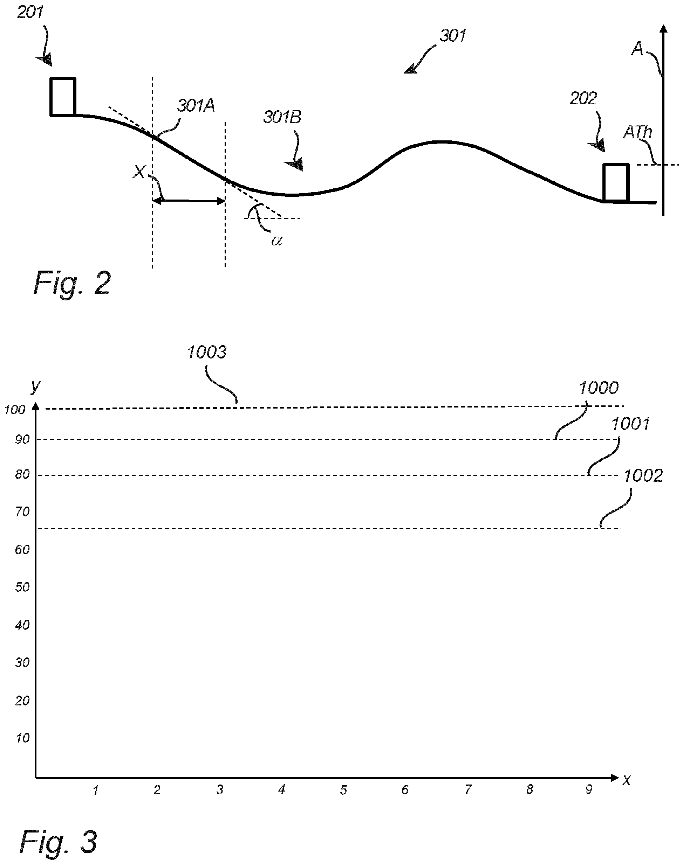

As shown in Fig. 1, the vehicle 1 comprises a control unit 7 configured to control the charging of the electric vehicle 1. The control unit 7 may be configured to communicate with a charging station control unit 201B of the first charging station 201. The control unit 7 is for example configured to stop the charging of the battery 3 at predetermined charging levels 1000, 1001, 1002 below the nominally fully charged level 1003, as shown in the graph of Fig. 3. Fig. 3 is a graph representing the level of charge of the battery 3 on the y-axis, e.g. represented by the SoC of the battery 3, over time (x-axis). In Fig. 3, the various charging levels have been illustrated by straight dashed lines for simplicity, and typically represent the charging level of the battery 3 at the corresponding charging station subsequent to stopping the corresponding charging event, but prior to that the electric vehicle 1 drives away from the charging station. As the electric vehicle 1 travels away from the charging station, and along any one of the first and second routes 301, 309, the charging level of the battery 3 typically varies over time (being reduced as energy is drawn from the battery 3, and increased as regenerative energy is charged to the battery 3).

In more detail, and with reference to Figs. 1 and 2, the control unit 7 is configured to receive altitude data of at least one of the first charging station 201 and the electric vehicle 1 located at the first charging station 201, and in response to the received altitude being below a predetermined altitude threshold, perform a first type charging event of the battery 3 of the electric vehicle 1 using the external power source 201A of the first charging station 201 and stopping the first type charging event at the first predetermined charging level 1000 below the nominally fully charged level 1003 of the battery 3. Thus, the control unit 7 is typically configured to compare the received altitude data of the first charging station 201 and/or the electric vehicle 1 with a predetermined altitude threshold, and configured to operate according to the first type charging event if the altitude of the first charging station 201 and/or the electric vehicle 1 at the first charging station 201 is below the predetermined altitude threshold.

Moreover, the control unit 7 is configured to evaluate the topography in a predetermined area 300 around the first charging station 201. In the example embodiment of Fig. 1, the predetermined area 300 is an area around the first charging station 201 including the second and third charging stations 202, 209. For example, the extension of the predetermined area 300 may be defined by a radius from the first charging station 201 to the second or third charging stations 202, 209. The evaluation of the topography of the predetermined area 300 is typically performed in response to the received altitude being above the predetermined altitude threshold. That is, the control unit 7 is configured to evaluate the topography in the predetermined area 300 around the first charging station 201 if the altitude of the first charging station 201 and/or the electric vehicle 1 at the first charging station 201 is above the predetermined altitude threshold. The control unit 7 may e.g. be configured to evaluate the topography in the predetermined area 300 around the first charging station 201 by being configured to provide, or receive, topography data of the predetermined area 300 (e.g. in the form of road topography data). This may e.g. be achieved by that the control unit 7 is configured to provide, or receive, map data of the predetermined area 300. Moreover, the control unit 201 may be configured to evaluate the topography in the predetermined area 300 around the first charging station 201 by performing a comparison of the provided, or received, topography data, with a predetermined criterium to identify the topography of the predetermined area 300. The step of identifying the topography in the predetermined area 300 may comprise the step of classifying, or categorizing, the evaluated topography into predefined groups.

Typically, the control unit 7 is configured to identify the topography of the predetermined area 300 as belonging to a predefined group of flat surroundings, or belonging to a predefined group of hilly surroundings. In response to the topography in the predetermined area 300 being identified as belonging to the predefined group of flat surroundings, the control unit 7 is configured to perform a second type charging event of the battery 3 of the electric vehicle 1 using the external power source 201A of the first charging station 201 and stopping the second type charging event at the second predetermined charging level 1001 below the nominally fully charged level 1003. Correspondingly, and in response to the topography in the predetermined area 300 being identified as belonging to the predefined group of hilly surroundings, the control unit 7 is configured to perform a third type charging event of the battery 3 of the electric vehicle 1 using the external power source 201A of the first charging station 201 and stopping the third type charging event at the third predetermined charging level 1002 below the nominally fully charged level 1003. As seen in the graph of Fig. 3, the first predetermined charging level 1000 (at approximately 90 % SoC compared to the nominally fully charged level 1003) is higher than the second predetermined charging level 1001 (at approximately 80 % SoC compared to the nominally fully charged level 1003), and the second predetermined charging level 1001 is higher than the third predetermined charging level 1002 (at approximately 65 % SoC compared to the nominally fully charged level 1003).

The predetermined criterium to identify whether the topography of the predetermined area 300 belong to the predefined group of flat or hilly surroundings may e.g. be an altitude drop in the predetermined area 300, or correspondingly, based on a maximum slope over a predefined distance (the maximum slope e.g. be defined as the mean or average slope at least along a certain distance).

Typically, the evaluated topography in the predetermined area 300 is the topography of the roads in the predetermined area 300. In the example embodiment of Fig. 1, the first and second routes 301, 309 corresponds to such roads. Thus, the roads along the first and second routes 301, 309 which the electric vehicle 1 may travel when leaving the first charging station 201, subsequently to charging the battery 3 according to the previously described first, second or third type charging event, method, may be evaluated with regards to its topography. The roads along the first and second routes 301, 309 may be referred to as a pre-known routes or roads as at least the topography of the routes and roads is known (or predefined).

Thus, the predetermined criterium may be used to identify whether the pre-known routes or roads in the predetermined area 300 belong to the predefined group of flat or hilly surroundings. For example, the topography in the predetermined area 300 is identified as belonging to the predefined group of hilly surroundings if at least one of the pre-known routes or roads in the predetermined area 300 has a maximum slope of above 3 % along at least a predefined distance, e.g. at least 3 % of the road distance, and if not, is identified as belonging to the predefined group of flat surroundings. As an alternative, the topography in the predetermined area 300 is identified as belonging to the predefined group of hilly surroundings if at least one of the pre-known routes or roads in the predetermined area 300 has an altitude drop of at least 150 m, and if not, is identified as belonging to the predefined group of flat surroundings.

For example, as shown in Fig. 2, being a schematic side view of the first route 301 of Fig. 1, showing the altitude variations along the road corresponding to the first route 301 (represented by the vertical axis A). According to at least one example embodiment, the second charging station 202 is a predetermined destination of the electric vehicle 1, separated by the first route 301 (i.e. the first route 301 is a predetermined route as the second charging station 202 is a predetermined destination). Thus, the control unit 7 may provide, or receive, information of the predetermined destination, and the first route 301 having a known topography (or known road topography, as previously described). Thus, the evaluated topography in the predetermined area 300 here corresponds to the topography of the first route 301 (and the pre-known road(s) included in the first route 301). As seen in Fig. 2, the first route 301 comprises a downhill portion 301 having a road section X (which is e.g. at least 50 m long) with a maximum slope of a. The maximum slope $\alpha$ is e. g. determined as the mean, or average slope, along the road section X. In the example of Fig. 2, $\alpha$ is above 3 %, and the first route 301 is thus defined to belong to predefined group of hilly surroundings as the previously mentioned predetermined criterium here is based on a maximum slope of above 3 %.

Moreover, as the first charging station 201 in Fig. 2 is arranged at an altitude A above the predetermined altitude threshold ATh, the decision of whether the second or third type charging event is to be used for charging the battery 3 of the electric vehicle is based on the evaluation of the predefined group of hilly surroundings. Thus, in this example, the battery 3 of the electric vehicle 1 is to be charged by the third type charging event and stopping the third type charging event at the third predetermined charging level 1002.

The third predetermined charging level 1002 is set, typically by the control unit 7, to correspond to the predicted battery regeneration when driving the electric vehicle 1 along the first route 301 from the first charging station 201 to the second charging station 202. The predicted battery regeneration is in turn determined by at least the known altitude of the first charging station 201, the known topography of the first route 301 between the first and second charging stations 201, 202, the weight of the electric vehicle 1 and a pre-determined regeneration efficiency of the electric vehicle 1.

Thus, as the altitude of the first charging station 201 is known together with that the first route 301 between the first and second charging stations 201, 202 are predetermined, and with a known topography, the predicted battery regeneration can be determined in a straightforward manner simply using the weight of the electric vehicle 1 and the regeneration efficiency. Hereby, the setting of the third predetermined charging level 1002 can be improved.

The predicted battery regeneration may be determined as the most limiting battery regeneration of the battery 3 of the electric vehicle 1 occurring somewhere along the first route 301 between the first charging station 201 and the second charging station 202. Based on the previously mentioned input data for determining the predicted battery regeneration, the predicted travel along the first route 301 includes the encountering of the downhill portion 301A. During such downhill portion 301A, the battery regeneration will peak, as the previously described regenerative braking system utilizes the energy produced when slowing the electric vehicle 1 down for charging the battery 3. Thus, depending on the charging level of the battery 3 when entering the downhill portion 301A, the charging level of the battery 3 may rise above the previously mentioned third predetermined charging level 1002 and reach the nominally fully charged level 1003 at the end 301B of the downhill portion 301A. Such position, or point along the first route 301, i.e. the end 301B of the downhill portion 301A, typically correspond to the most limiting battery regeneration of the battery 3. Thus, by predicting the battery regeneration when driving the electric vehicle 1 along the first route 301, and taking the most limiting battery regeneration of the battery 3 into account, the third predetermined charging level 1002 can be set accordingly. For example, if the third predetermined charging level 1002 would not be set to correspond to the predicted battery regeneration when driving the electric vehicle 1 along the first route 301 to the second charging station 201, or if the charging event at the first charging station 201 would simply be achieved to reach the nominally fully charged level 1003 of the battery 3, another means for disposing the regenerative energy would need to be used, e.g. by transforming the energy into heat in a resistor.

As the electric vehicle 1 reaches the second charging station 202, the same or corresponding procedure as for charging the electric vehicle 1 at the first charging station 201 may be carried out. Thus, the second charging station 202 may control the charging of the battery 3 of the electric vehicle 1 by performing a charging event according to the first, second or third type charging event, and stopping the corresponding charging event at the first, second or third predetermined charging level 1000, 1001, 1002, e.g. by means the control unit 7.

However, it should be noted that the predetermined destination, in this example the second charging station 202, need not to be provided in order to carry out the method of the invention. According to at least one example embodiment, if the electric vehicle 1 is charged at a charging station, e.g. the second charging station 202, located at an altitude A below the predetermined altitude threshold ATh, the battery 3 of the electric vehicle 1 is charged by the first type charging event and the first type charging event is stopped at the first predetermined charging level 1000 below the nominally fully charged level 1003 of the battery 3.

According to another example embodiment, assuming that the first route 301 is removed, or is closed for maintenance, and only the second route 309 to the third charging station 209 is available, and wherein the second route 309 does not have a topography defined to belong to the predefined group of hilly surroundings as there is no corresponding road section X having a maximum slope of above 3 % along the second route 309. That is, the topography of the second route 309 is identified to belong to the predefined group of flat surroundings. In this case, the battery 3 of the electric vehicle 1 is charged by the second type charging event and the second type charging event is stopped at the second predetermined charging level 1001 below the nominally fully charged level 1003 of the battery 3. Thus, also in this case, there is no need to provide any predetermined destination, as there is no route or road in the predetermined area 300 which belongs to the predefined group of hilly surroundings.

However, it should be mentioned that all of the first, second and third predetermined charging levels 1000, 1001, 1002 may be set to correspond to an estimated battery regeneration when driving the electric vehicle 1 withing the predetermined area 300. For example, the estimated battery regeneration with regards to the first and second predetermined charging level 1000, 1001 may be set to a fixed value regardless of any predetermined destination (as the altitude A of the electric vehicle 1 at the charging station is below the predetermined altitude threshold ATh and/or as the topography of the predetermined area 300 is identified to belong to the predefined group of flat surroundings). For the estimated battery regeneration with regards to the third predetermined charging level, the previously described predicted battery regeneration (i.e. depending on the predicted battery regeneration when driving the electric vehicle along the predetermined route to the predetermined destination) is used. Hereby, an improved utilization of the battery while minimizing (or avoiding) the need to dispose the regenerative energy by other means than charging the battery is provided. Moreover, by determining the predicted battery regeneration only for the third predetermined charging level 1002 (and thus the third type charging event), there is a reduced need, or in some cases no need, to acquire sensitive data from the electric vehicle 1, such as route planning or predetermined destinations (e.g. when the first and/or second type charging events are chosen instead of the third type charging event).

It should be noted that in the above example, the predetermined destination is the second charging station 202. However, the predetermined destination may be something different to a charging station, e.g. a final destination of the electric vehicle.

It should also be noted that the method and steps performed by the control unit 7 of the electric vehicle, may according to at least one example embodiment be performed by one or more of the charging station control units, such as the charging station control unit 201B.

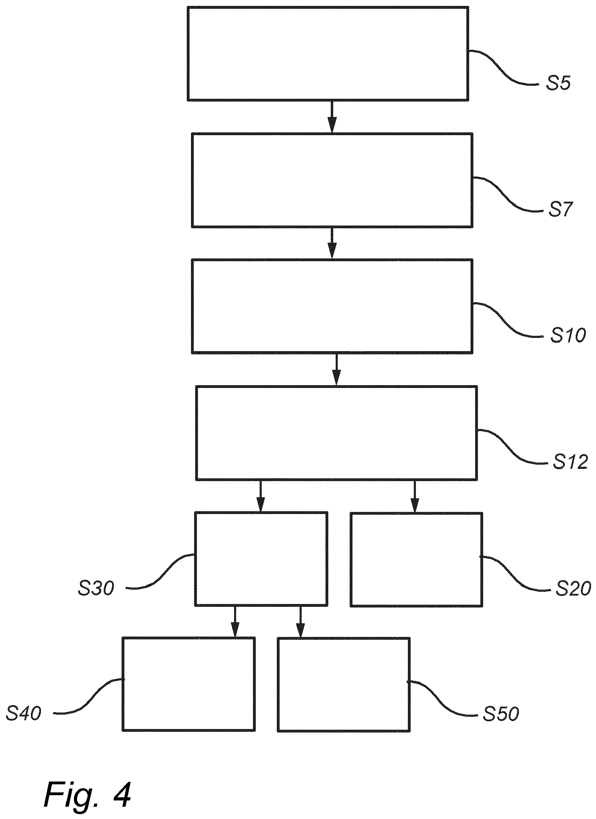

The invention will now be described with reference to the flow chart of Fig. 4, describing the steps of a method for charging a battery of an electric vehicle at a charging station. For example, the charging system 100 as described with reference to Figs. 1-3 could be used in the method.

In a first step, S10, altitude data of at least one of the charging station and the electric vehicle located at the charging station is provided.

In a second step S12, the provided altitude data is compared to a predetermined altitude threshold.

In a third step S20, being performed in response to the provided altitude being below the predetermined altitude threshold, a first type charging event of the battery of the electric vehicle is performed using an external power source of the charging station and stopping the first type charging event at a first predetermined charging level below the nominally fully charged level of the battery.

In a fourth step S30, being performed instead of the third step S20, and in response to the provided altitude being above the predetermined altitude threshold, the topography in a predetermined area around the charging station is evaluated. The topography in the predetermined area is at least identified as belonging to one of a predefined group of flat surroundings and a predefined group of hilly surroundings. Typically, the evaluated topography in the predetermined area is the topography of the routes (or roads) in the predetermined area as described with reference to Figs. 1-2.

In a fifth step, S40, being performed in response to the fourth step S30 and that the topography of the predetermined area is identified as belonging to the predefined group of flat surroundings, a second type charging event of the battery of the electric vehicle is performed using the external power source of the charging station and stopping the second type charging event at a second predetermined charging level below the nominally fully charged level.

In a sixth step, S50, being performed instead of the fifth step S40 and that the topography in the predetermined area is identified as belonging to the predefined group of hilly surroundings, a third type charging event of the battery of the electric vehicle is performed using the external power source of the charging station and stopping the third type charging event at a third predetermined charging level below the nominally fully charged level.

The first, second and third type charging events were described with reference to Figs. 1-3. Thus, the first predetermined charging level is higher than the second predetermined charging level, and the second predetermined charging level is higher than the third predetermined charging level, as shown in Fig. 3. The first, second and third predetermined charging levels may e.g. be determined on-board the electric vehicle, using the previously described control unit.

In an optional first sub-step S5, a predetermined destination of the electric vehicle is provided. The predetermined destination is separated from the charging station by a predetermined route with known topography. The third predetermined charging level may e.g. be set to correspond to the predicted battery regeneration when driving the electric vehicle along the predetermined route to the predetermined destination, as described with reference to Fig. 2. Thus, in an optional second sub-step S7, the predicted battery regeneration is determined. This may e.g. be determined by at least known altitude of the charging station, the known topography of the predetermined route between the charging station and the predetermined destination, the weight of the electric vehicle and a pre-determined regeneration efficiency of the electric vehicle.

The predicted battery regeneration in sub-step S7 may be determined as the most limiting battery regeneration of the battery of the electric vehicle occurring somewhere along the predetermined route between the charging station and the predetermined destination. For example, this is determined to a point along the predetermined route at which the battery of the electric vehicle is predicted to be nominally fully charged.

It is to be understood that the present invention is not limited to the embodiments described above and illustrated in the drawings; rather, the skilled person will recognize that many changes and modifications may be made within the scope of the appended claims.

Additionally, variations to the disclosed embodiments can be understood and effected by the skilled person in practicing the claimed inventive concept, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

**Claims**

1. A method for charging a battery (3) of an electric vehicle (1) at a charging station (201), the method comprising:

   - providing (S10) altitude data of at least one of the charging station (201) and the electric vehicle (1) located at the charging station (201),
   - in response to the provided altitude being below a predetermined altitude threshold, performing (S20) a first type charging event of the battery (3) of the electric vehicle (1) using an external power source (201A) of the charging station (201) and stopping the first type charging event at a first predetermined charging level (1000) below the nominally fully charged level (1003) of the battery (3),
   - in response to the provided altitude being above the predetermined altitude threshold, evaluating (S30) the topography in a predetermined area (300) around the charging station (201), and

     - in response to the topography in the predetermined area (300) being identified as belonging to a predefined group of flat surroundings, performing (S40) a second type charging event of the battery (3) of the electric vehicle (1) using the external power source (201A) of the charging station (201) and stopping the second type charging event at a second predetermined charging level (1001) below the nominally fully charged level (1003), and
     - in response to the topography in the predetermined area (300) being identified as belonging to a predefined group of hilly surroundings, performing (S50) a third type charging event of the battery (3) of the electric vehicle (1) using the external power source (201A) of the charging station (201) and stopping the third type charging event at a third predetermined charging level (1002) below the nominally fully charged level (1003),

   wherein the first predetermined charging level (1000) is higher than the second predetermined charging level (1001) and wherein the second predetermined charging level (1001) is higher than the third predetermined charging level (1002).

2. The method according to claim 1, further comprising:

   - providing (S5) a predetermined destination (202, 209) of the electric vehicle (1), the predetermined destination (202, 209) being separated from the charging station (202) by a predetermined route (301, 309) with known topography.

3. The method according to claim 2, wherein the third predetermined charging level (1002) is set to correspond to the predicted battery regeneration when driving the electric vehicle (1) along the predetermined route (301, 309) to the predetermined destination (202, 209).

4. The method according to claim 3, wherein the predicted battery regeneration is determined by at least known altitude of the charging station (201), the known topography of the predetermined route (301, 309) between the charging station (201) and the predetermined destination (301, 309), the weight of the electric vehicle (1) and a pre-determined regeneration efficiency of the electric vehicle (1).

5. The method according to any one of claims 3-4, wherein the predicted battery regeneration is determined as the most limiting battery regeneration of the battery (3) of the electric vehicle (1) occurring somewhere along the pre-

determined route (301, 309) between the charging station (201) and the predetermined destination (202, 209).

6. The method according to claim 5, wherein the most limiting battery regeneration of the battery (3) of the electric vehicle (1) along the predetermined route (301) between the charging station (201) and the predetermined destination (202) is determined to a point (301B) along the predetermined route (301) at which the battery (3) of the electric vehicle (1) is predicted to be nominally fully charged.

7. The method according to any one of the preceding claims, wherein at least one of the first, second and third predetermined charging levels (1000, 1001, 1002) is determined on-board the electric vehicle (1).

8. The method according to any one of the preceding claims, wherein the evaluated topography in the predetermined area is the topography of the roads (301, 309) in the predetermined area (300).

9. A charging system (100) comprising at least one charging station (200, 201, 202, 209) and an electric vehicle (1) having a battery (3) configured to be charged at the charging station (201), the charging system (100) comprising a control unit (7, 201B) configured to:

    receive altitude data of at least one of the charging station (201) and the electric vehicle (1) located at the charging station (201),

        - in response to the received altitude being below a predetermined altitude threshold, perform a first type charging event of the battery (3) of the electric vehicle (1) using an external power source (201A) of the charging station (201) and stopping the first type charging event at a first predetermined charging level (1000) below the nominally fully charged level (1003) of the battery (3),
        - in response to the received altitude being above the predetermined altitude threshold, evaluate the topography in a predetermined area (300) around the charging station (201), and

            - in response to the topography in the predetermined area (300) being identified as belonging to a predefined group of flat surroundings, perform a second type charging event of the battery (3) of the electric vehicle (1) using the external power source (201A) of the charging station (201) and stopping the second type charging event at a second predetermined charging level (1001) below the nominally fully charged level (1003), and
            - in response to the topography in the predetermined area (300) being identified as belonging to a predefined group of hilly surroundings, perform a third type charging event of the battery (3) of the electric vehicle (1) using the external power source (201A) of the charging station (201) and stopping the third type charging event at a third predetermined charging level (1002) below the nominally fully charged level (1003),

    wherein the first predetermined charging level (1000) is higher than the second predetermined charging level (1001) and wherein the second predetermined charging level (1001) is higher than the third predetermined charging level (1002).

10. A computer implemented method for charging a battery (3) of an electric vehicle (1) at a charging station (201), the method comprising:

    - providing (S10), by a processor device, altitude data of at least one of the charging station (201) and the electric vehicle (1) located at the charging station (201),
    - in response to the provided altitude being below a predetermined altitude threshold, performing (S20), by the processor device, a first type charging event of the battery (3) of the electric vehicle (1) using an external power source (201A) of the charging station (201) and stopping the first type charging event at a first predetermined charging level (1000) below the nominally fully charged level (1003) of the battery (3),
    - in response to the provided altitude being above the predetermined altitude threshold, evaluating (S30), by the processor device, the topography in a predetermined area (300) around the charging station (201), and

        - in response to the topography in the predetermined area (300) being identified as belonging to a predefined group of flat surroundings, performing (S40), by the processor device, a second type charging event of the battery (3) of the electric vehicle (1) using the external power source (201A) of the charging station (201) and stopping the second type charging event at a second predetermined charging level (1001) below the nominally fully charged level (1003), and

- in response to the topography in the predetermined area (300) being identified as belonging to a predefined group of hilly surroundings, performing (S50), by the processor device, a third type charging event of the battery (3) of the electric vehicle (1) using the external power source (201A) of the charging station (201) and stopping the third type charging event at a third predetermined charging level (1002) below the nominally fully charged level (1003),

wherein the first predetermined charging level (1000) is higher than the second predetermined charging level (1001) and wherein the second predetermined charging level (1001) is higher than the third predetermined charging level (1002).

11. A control system comprising one or more control units configured to perform the method of any of claims 1-8, or the computer implemented method of claim 10.

12. A vehicle comprising the control system of claim 11, to perform the method of any of claims 1-8, or the computer implemented method of claim 10.

13. A computer program comprising instructions to cause the charging system (100) of claim 9 to execute the steps of the method of any one of claims 1 to 8, when the program is run on a computer.

14. A computer readable medium carrying a computer program comprising instructions to cause the charging system (100) of claim 9 to execute the steps of the method of any one of claims 1 to 8, when the program is run on a computer.

Fig. 1

*201*

*301*

*301A*

*301B*

*202*

*A*

*ATh*

*X*

*α*

## Fig. 2

*1003*

*1000*

*1001*

*1002*

*y*

*x*

## Fig. 3

Fig. 4

Europäisches
Patentamt

European
Patent Office

Office européen
des brevets

# EUROPEAN SEARCH REPORT

**Application Number**

EP 22 21 1692

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/001834 A1 (KIM JINYONG [KR]) 7 January 2021 (2021-01-07) * paragraph [0047] – paragraph [0316]; figures 1-10 * ----- | 1-14 | INV. B60L15/20 B60L53/60 |
| A | US 2015/097512 A1 (LI YONGHUA [US] ET AL) 9 April 2015 (2015-04-09) * paragraph [0013] – paragraph [0041]; figures 1-8 * ----- | 1-14 | |

**TECHNICAL FIELDS SEARCHED (IPC)**

B60L

The present search report has been drawn up for all claims

| Place of search | Date of completion of the search | Examiner |
|---|---|---|
| The Hague | 23 May 2023 | Altuntas, Mehmet |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 1692

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2023

| Patent document cited in search report | Publication date | Patent family member(s) | Publication date |
|---|---|---|---|
| US 2021001834 A1 | 07-01-2021 | CN 112172589 A<br>KR 20210005438 A<br>US 2021001834 A1 | 05-01-2021<br>14-01-2021<br>07-01-2021 |
| US 2015097512 A1 | 09-04-2015 | CN 104512265 A<br>DE 102014219658 A1<br>US 2015097512 A1 | 15-04-2015<br>09-04-2015<br>09-04-2015 |

EPO FORM P0459

For more details about this annex : see Official Journal of the European Patent Office, No. 12/82